# EUROPÄISCHE PATENTANMELDUNG

(11) **EP 0 531 864 A1**
(43) Veröffentlichungstag der Anmeldung: **17.03.1993**
(21) Anmeldenummer: 92114910.0
(22) Anmeldetag: 01.09.1992
(51) Int. Cl.: C02F 1/44, C02F 9/00, C02F 11/06

(54) **Verfahren zur Behandlung von salzhaltigen Abwässern**

(30) Priorität: 12.09.1991 DE 4130334
(71) Anmelder: BAYER AG, 51368 Leverkusen (DE)
(72) Erfinder: Tegtmeyer, Dietrich, Dr.., W-5000 Köln 80 (DE); Baumann, Friedrich-Wilhelm, Dr., W-2211 St. Margerethen (DE); Stephan, Günter, Dr., W-2222 Marne (DE)

(57) **Zusammenfassung**

Das Verfahren zur Aufarbeitung von Abwässern und Entsorgung der darin befindlichen Frachten durch Kombination von Aufkonzentration, Eindampfung und Gasphasenoxidation ist wirtschaftlich besonders rentabel, da die zu verbrennenden Konzentrate einen sehr geringen Salzgehalt aufweisen.

## Beschreibung

Die Entsorgung von problematischen Abwasserströmen über Eindampfung und anschließender Gasphasenoxidation (Verbrennung) ist Stand der Technik (vgl. z.B. Chem.-Ing.-Tech. 57 (1985) Nr.10, S.859-863). Diese Entsorgungsmöglichkeit ist jedoch recht teuer und sonnt für große Volumenströme mit relativ geringen Belastungen wirtschaftlich nicht rentabel. Ebenso Stand der Technik ist eine membrantechnische Behandlung von Abwasserströmen (vgl. z.B. K. Marquart, Abfallwirtschaftsjournal 2 (1990) Nr. 4), insbesondere von farbstoffhaltigen Abwässern (Staude, Chem.-Ing.-Tech. 45 (1973) Nr.20, S.1222). Hier stellt sich jedoch in der Regel das Entsorgungsproblem des hergestellten Konzentrats, in dem sich dann der überwiegende Teil der Feststofffracht befindet.

Die Aufgabe der vorliegenden Erfindung bestand also darin, ein wirtschaftlich rentables Verfahren zur membrantechnischen Aufarbeitung von Abwässern bereitzustellen und gleichzeitig das damit verknüpfte Problem der Entsorgung der Abwasserkonzentrate zu lösen.

Die vorliegende Erfindung betrifft ein dreistufiges Verfahren zur Aufarbeitung von Abwässern und Entsorgung der darin befindlichen Frachten, wobei das Abwasser in einer ersten Stufe in einem Membranprozeß aufkonzentriert, das erhaltene Konzentrat in einer zweiten Stufe eingedampft und in einer dritten Stufe durch Gasphasenoxidation verbrannt wird.

Die beim Membranverfahren anfallenden Permeate und die in den Nachfolgeschritten anfallenden Kondensate können entweder z.B. als Spülwasser in die Produktion zurückgeführt oder aber über andere Aufarbeitungsverfahren weiterbehandelt werden; als solche Verfahren wären z.B. die biologische Aufarbeitung, andere Membranverfahren wie Elektrodialyse, Adsorptionsverfahren oder Naßoxidationsverfahren zu nennen.

Unter Abwässern sind insbesondere Produktionsabwasser der chemischen Industrie zu verstehen, wie sie beispielsweise bei der Farbstoffsynthese in Form von Abläufen von Isolierungen, Permeaten aus Druckpermeationen oder als Apparatewaschwasser anfallen.

Die Kapazität der Abwasserverbrennung wird in vielen Fällen von dem Salzdurchsatz bestimmt. Durch die Kombination der drei Verfahrensschritte des erfindungsgemäßen Verfahrens hingegen besteht die Möglichkeit den Gehalt an anorganischen Salzen gegenüber der organischen Fracht in dem zu verbrennenden Konzentrat sehr klein zu halten. Auf diese Weise kann die verbleibende organische Fracht wesentlich wirtschaftlicher entsorgt werden. Der zurückbleibende Glührückstand muß deponiert oder aufgearbeitet werden.

Bei der Durchführung des erfindungsgemäßen Verfahrens hat es sich in bestimmten Fällen als besonders günstig erwiesen, wenn in der ersten Verfahrensstufe der Membranprozeß aus einer Kombination aus zwei oder mehreren hintereinandergeschalteten Membranverfahren besteht, wobei die verwendeten Membranen sich entsprechend den an sie gestellten Anforderungen hinsichtlich ihrer Trenngrenzen und/oder ihres Aufbaus unterscheiden können.

Bei dem Membranprozeß zur Aufkonzentration der Abwässer in der ersten Stufe des erfindungsgemäßen Verfahrens handelt es sich bevorzugt um Druckpermeation an Membranen, wobei als Membranverfahren insbesondere Reversosmose, Mikro-, Ultra- oder Nanofiltration oder eine Kombination aus zwei oder mehreren dieser Methoden angewendet werden können.

In einer bevorzugten Ausführungsform des erfindungsgemäßen Verfahrens besteht der Membranprozeß der ersten Verfahrensstufe aus einer Kombination von zwei aufeinanderfolgenden Druckpermeationsschritten mit Membranen mit unterschiedlichen Trenngrenzen, in denen das Permeat des ersten Schrittes in einem nachfolgenden Schritt nochmals aufgearbeitet wird, wobei deutliche Vorteile für die gesamte Verfahrensstufe erzielt werden.

Ein Beispiel hierfür ist die Kombination von Mikrofiltration und anschließende Nanofiltration, wobei im ersten Schritt störende ungelöste Bestandteile abgetrennt, und im zweiten Schritt bei der Nanofiltration die Permeationsbedingungen erheblich verbessert werden. Die beiden Konzentrate können dann zusammen der zweiten und dritten Verfahrensstufe zugeführt werden.

Ebenso kann es vorteilhaft sein, für den Membranprozeß zwei Umkehrosmoseschritte hintereinander anzuordnen, um eine besonders gute Permeatqualität zu erzielen. Da das Permeat des ersten Aufarbeitungsschrittes weitgehend salzfrei ist, wird im zweiten Aufarbeitungsschritt ein sehr hoher Permeatfluß erzielt. Je nach Fracht kann das Konzentrat des zweiten Schritts entweder dem Abwasser vor dem ersten Schritt zugegeben, oder aber mit dem Konzentrat aus Schritt eins gemeinsam in die Eindampfung und anschließende Verbrennung geleitet werden.

Im ersten Verfahrensschritt werden vorzugsweise salzarme Abwässer eingesetzt, die einen Salzgehalt <1 Gew.-% aufweisen, die dann mittels Reversosmose auf einen Salzgehalt von maximal 4 Gew.-% aufkonzentriert werden. Die so erhaltenen Konzentrate werden dann in der zweiten Verfahrensstufe bis zu einem Trockengehalt von 50-80 Gew.-%, vorzugsweise 60-75 Gew.-%, eingedampft.

Bei der Aufarbeitung von salzhaltigen Abwässern mit Salzgehalten >1 Gew.-% erfolgt die erste Stufe, die membrantechnische Aufkonzentration, vorzugsweise mit Membranen, die die Eigenschaft besitzen organische Moleküle mit einem Molekulargewicht >150 Dalton von anorganischen Salzen zu trennen. Die in dieser ersten Verfahrensstufe erhaltenen Konzentrate werden dann anschließend in der zweiten Stufe bis zu einem Trockengehalt von beispielsweise 50-80 Gew.-%, vorzugsweise ca. 70 Gew.-%, eingedampft und schließlich in der dritten Stufe einer Gasphasenoxidation zugeführt.

In der dritten Verfahrensstufe beträgt der Salzgehalt der eingesetzten Konzentrate im allgemeinen 30 bis 80 Gew.-% bei einem Trockengehalt von beispielsweise 50-80 Gew.-%, vorzugsweise 70 Gew.-%.

Unter Salzen sind in diesem Zusammenhang hauptsächlich anorganische, einwertige Metalle enthaltende Salze wie z.B. Alkalimetallhalogenide oder -sulfate zu verstehen.

Bei stark salzhaltigen Abwasserströmen (Salzgehalt >2 Gew.-%) mit organischen Frachten, die von einer Nanofiltrations- oder Ultrafiltrationsmembran ausreichend zurückgehalten werden, kann es sinnvoll sein, zusätzlich zu einer Aufkonzentration eine Diafiltration (hierbei wird das Abwasser membrantechnisch entsalzt, indem das gebildete salzhaltige Permeat kontinuierlich durch entsalztes Wasser ersetzt wird) des Abwassers durchzuführen. Auf diese Weise werden durch das Ausschleusen der Salze große Feststofffrachten aus dem zu verbrennenden Konzentrat entfernt, wodurch die zweite und dritte Verfahrensstufe wirtschaftlich effektiver werden.

Besonders vorteilhaft an dem dreistufigen Verfahren ist die Möglichkeit der gemeinsamen Entsorgung verschiedener Abwasserströme. Da die in der ersten Verfahrensstufe vorzugsweise angewendete Druckpermeation ein sehr vielseitiges Verfahren in modularer Bauweise ist, kann es den jeweiligen Abwasserströmen entsprechend optimal angepaßt werden. So können verschiedene Abwasserströme, oft mit jeweils andersartigen Membranen, Modulen und unter verschiedenen Betriebsbedingungen aufkonzentriert, und dann als gemeinsamer Konzentratstrom in der zweiten oder dritten Verfahrensstufe eingedampft und verbrannt werden.

Für den Membranprozeß der ersten Verfahrensstufe des erfindungsgemäßen Verfahrens können Membranen, bestehend aus unterschiedlichen Materialien, die unterschiedliche Trenngrenzen besitzen, verwendet werden.

Bei der Reversosmose werden Membranen eingesetzt, die für Wassermoleküle durchlässig sind, Salze jedoch zurückhalten.

Die Ultrafiltration wird mit Membranen betrieben, die für Moleküle mit einem Molekulargewicht unter ca. 20 000, vorzugsweise jedoch unterhalb 1 000 Dalton sowie für anorganische Salze durchlässig sind.

Für die Nanofiltration verwendbare Membranen sind für Moleküle mit einem Molekulargewicht unter 1 000 Dalton, vorzugsweise unter ca. 150 Dalton sowie für einwertige Ionen durchlässig; höherwertige Ionen werden von diesen Membranen weitgehend zurückgehalten.

Dazu können prinzipiell symmetrische, asymmetrische und/oder Compositemembranen Verwendung finden. Sie können sowohl aus organischen, als auch aus anorganischen Materialien bestehen.

Organische Materialien sind beispielsweise solche aus Polyvinylidenfluorid, Celluloseacetat, Polytetrafluorethan, Polyacrylnitril, Polyethylenimin, Copolymerisate aus Polyacrylnitril und Vinylpyrrolidon, Polysulfon, Polyamid, Polyhydantoin oder auch hydrophilierte Polyolefine, z.B. auf Basis von Polypropylen.

Ebenfalls geeignet sind Membranen, die an einer Seite des Membranträgers eine asymmetrische Beschichtung aufweisen, die im wesentlichen aus wenigstens einer Polymerschicht besteht, die aus einem organischen, filmbildenden hydrophilen Polymer und aus einer monomeren ionischen Verbindung und/oder einem Vernetzungsmittel gebildet worden ist, und aus einem dünnen semipermeablen interfacial vernetzten Film, der ionische Gruppen enthält, die sich auf der Oberseite dieser Schicht befinden und integral darauf gebunden sind, mit der Maßgabe, daß es sich dabei nicht um amphotere, interfacial vernetzte Filme handelt. Die Polymerschicht kann kationische oder amphotere Ladungen enthalten, und der dünne Film, der sich auf der Oberseite der Polymerschicht befindet, kann freie anionische Gruppen enthalten. Derartige Membranen sind beispielsweise in EP-A 0 242 761 beschrieben.

Anorganische Membranen können solche aus porösem Metall bzw. Metallegierungen sein (sogenannte Metallsintermembranen, z.B. aus porösem Stahl) oder solche aus porösem Kohlenstoff, deren Oberfläche z.B. mit einer dünnen Schicht aus Zirkondioxid, Silicium- oder Aluminiumoxid belegt sein kann, oder weiterhin solche aus porösem Glas oder Keramik.

Vorzugsweise werden zur Durchführung des erfindungsgemäßen Verfahrens die Lösungen einer Druckpermeation an asymmetrischen Membranen oder Compositmembranen, die gegebenenfalls mit ionischen Gruppen modifiziert sind, unterworfen, wobei, abhängig von der jeweiligen Porengröße der verwendeten Membranen, salzhaltiges oder salzfreies Permeat ausgeschleust wird.

Zur Aufkonzentration gemäß der ersten Stufe des erfindungsgemäßen Verfahrens können alle handelsüblichen Druckpermeationsanlagen verwendet werden. Solche Geräte können z.B. als Platten-, Rahmen-, Rohr-, Schlauch-, Wickel-, Hohlfaser- oder Hohlfeinfasermodul ausgebildet sein, in die die oben beschriebenen Membranen eingebaut werden können.

Wenn im Abwasser suspendierte Teilchen vorhanden sind, muß dieses entweder gut vorfiltriert werden, oder aber die Anlage muß zur Druckpermeation von Suspensionen geeignet sein.

Zur Vorfiltration eignen sich übliche statische Filtertechniken, die gegebenenfalls rückspülbar betrieben werden können.

In der zweiten und dritten Verfahrensstufe handelt es sich um eine Eindampfung und Gasphasenoxidation der hergestellten Konzentrate mit Erzeugung von Abhitzedampf, wie sie beispielsweise in Chem.-Ing.-Tech. 57 (1985) Nr. 10, S.859-863 genau beschrieben ist. Das Konzentrat wird in einem mehrstufigen Prozeß bis zu einem Trockengehalt von ca. 70 Gew.-% eingedampft, und dann aufgrund des hohen Salzgehalts von > 40 Gew.-% über zwei Flammenverdampfungsbrenner gegeben, und mit überhitztem Dampf zerstäubt. Dabei wird die organische Fracht verbrannt, der anorganische Teil als Glührückstand ausgetragen. Das Rauchgas wird in einer Quenche und einem Kondensationselektrofilter nachgereinigt.

### Beispiel 1

Ein Produktionsabwasser mit einem Chloridgehalt von 0,02 % und einem Gesamtkohlenstoffgehalt (TOC-Gehalt gemäß DIN 38 409, Teil 3) von 2 830 mg/l wird in einem einstufigen Prozeß über eine Composite-Reversosmosemembran (Polyamidschicht auf Polysulfonträger, Salzrückhalt >97 %) in einem Wickelmodul bei einer Temperatur von 20°C und einem Arbeitsdruck von 40 bar auf 1/10 des Anfangsvolumens eingeengt. Im Mittel wurde ein Permeatfluß von 540 1/m².d erzielt. Analoge Ergebnisse können auch mit anderen Membrantypen, z.B. auf Basis von Celluloseacetat, etc. erzielt werden. Das erhaltene Permeat hat im Mittel einen Chloridgehalt von 0,004 % und einen TOC-Gehalt von 6 mg/l und kann in die Produktion zurückgeführt werden. Das Konzentrat, das einen Trockengehalt von ca. 4 % besitzt, wird bis zu einem Trockengehalt von ca 70 % eingedampft. In dieser Form ist es eine pumpbare Slurry, die in eine Flamme gesprüht wird, in der das restliche Wasser verdunstet und die organischen Inhaltsstoffe verbrennen.

### Beispiel 2

Ein Produktionsabwasser mit einem Chloridgehalt von 3,1 % und einem TOC-Gehalt von 2 740 mg/l und einem Gehalt an adsorbierbarem organisch gebundenem Chlor (AOX-Gehalt gemäß DIN 38 409, Teil 14) von 350 mg/l wird zuerst in einem membrantechnischen Prozess, bestehend aus zwei Schritten, aufgearbeitet. In dem ersten Schritt wird das Abwasser bei 3 bar und 25°C mit einer symmetrischen Polypropylenmembran (Porendurchmesser 0,2 µ) in tubularer Anordnung mikrofiltriert, und auf über 98 %, bezogen auf das Ausgangsvolumen, eingeengt. Der mittlere Permeatfluß beträgt ca. 3000 l/m².d. Das dabei entstehende Permeat wird in einem zweiten Schritt über Nanofiltration (Compositemembran, Polyamidschicht auf Polyethersulfonträger, Trenngrenze 300 Dalton) in einem Rohrmodul bei 40 bar und 25°C aufkonzentriert. Bei einem mittleren Permeatfluß von 400 l/m².d wurde eine Aufkonzentration auf ca. 25 %, bezogen auf das Ausgangsvolumen, erzielt. Ähnliche Ergebnisse erzielt man, wenn man im ersten Schritt Keramikmembranen mit größenordnungsmäßig gleichem Porendurchmesser, und/oder im zweiten Schritt Membrantypen einsetzt, wie sie etwa in EP-A 0 242 761 beschrieben sind.

Das Permeat aus der Nanofiltration, das einen TOC-Gehalt von 115 mg/l, einen AOX-Gehalt von 28 mg/l und einen Chloridgehalt von 2,5 % hat, wird einer biologischen Nachbehandlung zugeführt. Die beiden Konzentrate werden gemaß Beispiel 1 eingedampft und verbrannt.

Bei einer direkten Zuführung des Produktionswassers in eine Nanofiltration wurde bei einer Aufkonzentration auf ebenfalls 25 % des Ausgangsvolumens unter gleichen Bedingungen (25°C, 40 bar) nur ein mittlerer Permeatfluß von 245 l/m².d erzielt. Das Permeat besaß annähernd die gleiche Qualität. Demnach wird bei der membrantechnischen Aufarbeitung in zwei Schritten durch die vorgeschaltete Mikrofiltration die Effektivität der Nanofiltration deutlich um ca. 40 % erhöht.

### Beispiel 3

Ein Produktionswasser mit einem Chloridgehalt von 0,4 % und einem TOC-Gehalt von 2 100 mg/l wird in einem zweistufigen Prozess aufgearbeitet.

In dem ersten Schritt wird das Abwasser über eine Composite-Reversosmosemembran (wie in Beispiel 1 beschrieben) in einem Wickelmodul bei 40 bar und 25°C auf ca. 15 % des Ausgangsvolumens eingeengt. Es wurde ein mittlerer Permeatfluß von 520 l/m².d erzielt. Das Permeat, das einen TOC-Gehalt von 30 mg/l und einen Chloridgehalt von 0,002 % hatte, wird in einem zweiten Schritt nochmals über Reversosmose (gleiche Membran) bei 30 bar und 25°C auf 5 % des Ausgangsvolumens aufkonzentriert. Hierbei lag der Permeatfluß bei 1 100 l/m².d.

Das im zweiten Schritt anfallende Permeat ist so sauber, daß es zur Synthese neuer Produkte wieder eingesetzt werden kann. Die beiden Konzentrate werden zusammengefaßt und gemeinsam der zweiten und dritten Stufe des Verfahrens, der Eindampfung und Verbrennung, zugeführt, wo sie gemäß Beispiel 1 aufgearbeitet werden.

## Patentansprüche

1. Verfahren zur Aufarbeitung von Abwässern und Entsorgung der darin befindlichen Frachten, dadurch gekennzeichnet, daß das Abwasser in einer ersten Stufe in einem Membranprozeß aufkonzentriert, das erhaltene Konzentrat in einer zweiten Stufe eingedampft und in einer dritten Stufe durch Gasphasenoxidation verbrannt wird.

2. Verfahren gemäß Anspruch 1, dadurch gekennzeichnet, daß in der ersten Verfahrensstufe der Membranprozeß aus einer Kombination aus zwei oder mehreren hintereinandergeschalteten Membranverfahren besteht, wobei die verwendeten Membranen sich hinsichtlich ihrer Trenngrenzen und/oder ihres Aufbaus unterscheiden können.

3. Verfahren gemäß Anspruch 1 und 2, dadurch gekennzeichnet, daß es sich bei dem Membranprozeß zur Aufkonzentration der Abwässer in der ersten Stufe um Druckpermeation an Membranen handelt, wobei als Membranverfahren insbesondere Reversosmose, Mikro-, Ultra- oder Nanofiltration oder eine Kombination aus zwei oder mehreren dieser Methoden angewendet werden.

4. Verfahren gemaß Ansprüchen 1 bis 3, dadurch gekennzeichnet, daß der Membranprozeß der ersten Verfahrensstufe aus einer Kombination von zwei aufeinanderfolgenden Druckpermeationsschritten besteht, wobei jeweils das Permeat des ersten Schritts im zweiten Schritt aufgearbeitet wird und das Konzentrat des zweiten Schritts entweder in den ursprünglichen Abwasserstrom, oder aber gemeinsam mit dem Konzentrat des ersten Schritts in die zweite und dritte Verfahrensstufe geleitet werden.

5. Verfahren gemäß Ansprüchen 1 bis 4, dadurch gekennzeichnet, daß der Membranprozeß der ersten Verfahrensstufe aus einer Kombination aus Mikrofiltration und anschließender Nanofiltration oder aus einer Kombination von zwei hintereinandergeschalteten Umkehrosmoseschritten besteht.

6. Verfahren gemäß Ansprüchen 1 bis 5, dadurch gekennzeichnet, daß bei der Aufarbeitung von salzhaltigen Abwässern die erste Verfahrensstufe mit Membranen erfolgt, die die Eigenschaft besitzen, organische Moleküle mit einem Molekulargewicht größer 150 Dalton von anorganischen Salzen zu trennen.

7. Verfahren gemaß Ansprüchen 1 bis 6, dadurch gekennzeichnet, daß für den Membranprozeß der ersten Verfahrensstufe symmetrische, asymmetrische oder Compositemembranen verwendet werden, die sowohl aus organischen als auch aus anorganischen Materialien bestehen können.

8. Verfahren gemäß Ansprüchen 1 bis 6, dadurch gekennzeichnet, daß in der ersten Verfahrensstufe asymmetrische Membranen auf Basis von organischen oder anorganischen Materialien, oder Compositemembranen, die gegebenenfalls mit ionischen Gruppen und/oder durch Aufbringung spezieller Polymerschichten nachträglich chemisch modifiziert sind, eingesetzt werden.

9. Verfahren gemäß Ansprüchen 1 bis 6, dadurch gekennzeichnet, daß in der ersten Verfahrensstufe Membranen eingesetzt werden, die an einer Seite des Membranträgers eine asymmetrische Beschichtung aufweisen, die im wesentlichen aus wenigstens einer Polymerschicht besteht, die aus einem organischen, filmbildenden hydrophilen Polymer und aus einer monomeren ionischen Verbindung und/oder einem Vernetzungsmittel gebildet worden ist, und aus einem dünnen semipermeablen interfacial vernetzten Film, der ionische Gruppen enthält, die sich auf der Oberseite dieser Schicht befinden und integral darauf gebunden sind, mit der Maßgabe, daß es sich dabei nicht um amphotere, interfacial vernetzte Filme handelt.
